(19) Europäisches Patentamt

European Patent Office

Office européen des brevets

(11) Publication number : **0 429 459 B1**

(12) **EUROPEAN PATENT SPECIFICATION**

(45) Date of publication of patent specification :
**12.08.92 Bulletin 92/33**

(51) Int. Cl.⁵ : **B60K 31/00, F16H 59/74**

(21) Application number : **89905662.6**

(22) Date of filing : **11.05.89**

(86) International application number :
**PCT/EP89/00514**

(87) International publication number :
**WO 90/13452 15.11.90 Gazette 90/26**

(54) **DETECTION OF ENGAGEMENT OF A GEAR IN A VEHICLE GEARBOX.**

(43) Date of publication of application :
**05.06.91 Bulletin 91/23**

(45) Publication of the grant of the patent :
**12.08.92 Bulletin 92/33**

(84) Designated Contracting States :
**DE FR GB**

(56) References cited :
**DE-A- 3 618 844
FR-A- 2 616 483
PATENT ABSTRACTS OF JAPAN, vol. 8, no.
144 (P-284)(1581),July 5, 1984**

(56) References cited :
**PATENT ABSTRACT OF JAPAN, vol. 8, no. 249
(M-338)(1686), November 15, 1984
PATENT ABSTRACTS OF JAPAN, vol. 11, no.
368 (M-647)(2815), December 2, 1987**

(73) Proprietor : **ROBERT BOSCH GMBH
Postfach 30 02 20
W-7000 Stuttgart 30 (DE)**

(72) Inventor : **FENCHEL, Reinhard
Turnstr. 31
W-7260 Calw-Altburg (DE)**
Inventor : **SEHER, Dieter
Zabergäustr. 10
W-7129 Ilsfeld (DE)**

## Description

The present invention relates to apparatus for detecting whether a gear is engaged in a gearbox of a mechanically propelled vehicle, particularly one equipped with a diesel engine and an electronic governor or diesel control (EDC), in accordance with the preamble to claim 1 as disclosed in DE-A-3 618 844. In the case of a vehicle provided with a travel velocity limiting system, it is important to be able to ascertain whether a gear is engaged or not. Should the vehicle exceed the permitted velocity the velocity limiting system influences the EDC to limit the injected fuel quantity down towards zero or towards the idling quantity for the lowermost idling speed. If at the same time the gearbox is in neutral, it then becomes impossible for the driver to engage the gearbox in a desired gear because he has no control over the engine speed. If the gearbox should jump out of gear into neutral in the event of the vehicle velocity being too high or should the driver disengage the clutch while the vehicle velocity exceeds the permitted maximum, the output signal produced when no gear is engaged can be used to switch off the velocity limitation mode and give the driver control of the engine speed when the vehicle velocity exceeds the permitted maximum to enable the driver to adjust the engine speed, by depressing the accelerator pedal, to a value at which he can engage the desired gear.

This uses the fact that there is no fixed relationship between vehicle velocity and engine speed when the gearbox is in neutral. It does not matter that the speed velocity ratio (n/v) is different for different engaged gears.

Should the engine speed stabilize, with the vehicle coasting at a substantially constant velocity, the speed/velocity ratio (n/v) will again become constant. The immediate re-establishment of the velocity limiting mode with the gearbox in neutral will again prevent the driver from engaging a gear.

### Advantages of the invention

The immediate re-establishment of the velocity limiting mode can be avoided by the feature of the characterising clause of claim 1. The time delay can be chosen e.g., at about 5 sec. to minimize the likelihood of the velocity limiting system being switched on again before the driver can re-engage the gearbox.

The feature of claim 2 can be adopted to avoid the velocity limiting mode being re-established after the delay in the case of the vehicle running downhill and the driver in the meantime not having re-engaged the gearbox.

### Drawing

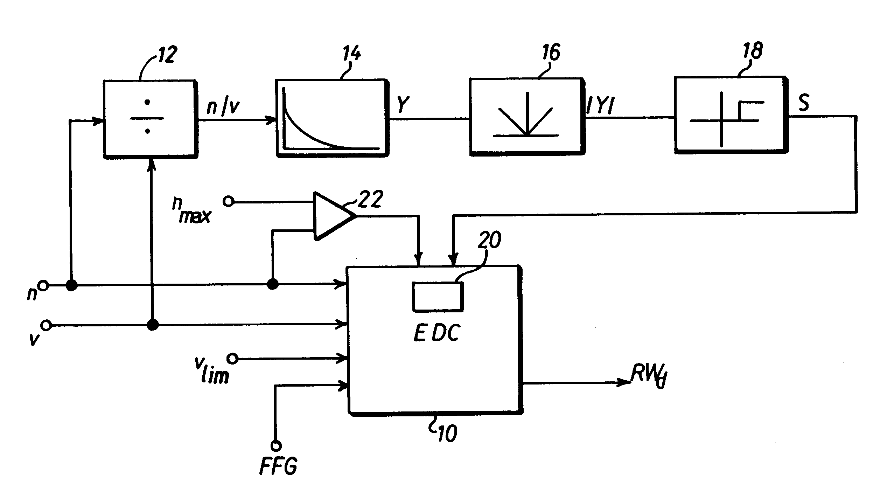

The invention is further described, by way of example, with reference to the accompanying drawing, which is a schematic circuit diagram of apparatus according to the invention for detecting whether a gear is engaged.

### Description of the Preferred Embodiment

The invention is illustrated as suitable for a vehicle (not shown) having a diesel engine (also not shown). The engine drives the wheels via the usual clutch, change speed gearbox and transmission shaft. The fuel injection system is provided with EDC including a main computer 10, which may in principle operate as described in DE-A-3531198. For this purpose, various operating parameters are fed to the main computer 10. These include the engine speed n, the vehicle velocity v and the position of the accelerator or drive pedal FFG. The main computer 10 delivers an output signal $RW_d$ representing the setting of the fuel injection pump to deliver the desired injected fuel quantities as determined by the pedal position FFG, the engine speed n and the other parameters. In addition, the main computer 10 is equipped with a velocity limiting system wherein the vehicle velocity v is compared with a maximum permitted velocity $v_{lim}$ and, in the event that $v > v_{lim}$, the pedal position signal FFG is overriden and the injected fuel quantity $RW_d$ is reduced towards the idling quantity to try and prevent the velocity v from rising further. It may actually rise further if the vehicle is travelling downhill.

In order that the driver can control the engine speed n when the vehicle is exceeding the permitted maximum velocity $v_{lim}$ and the gearbox is in neutral, it is necessary to detect when the gearbox is in neutral and to be able to disable the velocity limitation accordingly.

According to the preferred embodiment of the invention, the engine speed n and vehice velocity v are fed to a dividing circuit 12 which calculates the ratio n/v. So long as any given gear is engaged, this ratio n/v remains constant (within close limits), irrespective of the actual speed and velocity (acceleration, retardation, vehicle at rest), although the ratio is different for different gear ratios and when the vehicle is stationary. When no gear is engaged, there is no fixed relationship between speed and velocity and the ratio n/v changes with respect to time. The ratio n/v is therefore delivered to a differentiating circuit 14 which differentiates this ratio and has an output $Y = d/dt(nv)$ which is zero so long as a gear is engaged but which can have a range of values, both positive and negative when the gearbox is in neutral.

As the sign of Y is of no interest, only its magnitude, the signal Y is applied to a tolerance threshold comparator 18 via a magnitude former 16. The magnitude $|Y|$ is thus applied to the comparator 18 irrespective-of the sign Y and as soon as the magnitude $|Y|$ is large enough to be indicative that n and v are no longer correlated, i.e., as soon as the tolerance threshold is exceeded, the comparator 18 supplies an inhibit signal S to the main computer 10. The inhibit signal S switches off the velocity limiting system so that the signal FFG can no longer be over-riden and the driver can control the engine speed n with the gearbox in neutral. This enables the driver to engage the desired gear.

If the driver does not engage the gearbox quickly, the engine speed n might stabilize whereby Y and therefore Y return to zero and the signal S is removed. However, the main computer 10 incorporates a delay circuit 20 which prevents the velocity limiting system from being switched on again until the delay period of, say about 5 sec., has elapsed after S = 0.

In the event of the vehicle running downhill at a velocity $v > v_{lim}$, it must be prevented that the velocity limiting system is switched on again, even after this delay of about 5 sec. has elapsed. To this end the engine speed n is compared in a comparator 22 with that speed $n_{max}$ which corresponds to the maximum permitted velocity $v_{lim}$ with the gearbox engaged in top gear and the output of the comparator 22 is fed to the main computer 10 to prevent the velocity limiting mode being switched on again when the engine has been running at a constant speed, for example, idling speed, for longer than the delay of about 5 sec.

The velocity signal v need not be a direct measure of the vehicle velocity. A suitable signal could be obtained from the output side of the clutch or from the transmission shaft.

## Claims

1. Apparatus for detecting whether a gear is engaged in a gearbox of a mechanically propelled vehicle, comprising a device (12) for calculating the ratio of the engine speed (n) to the vehicle velocity (v), a device, preferably a differentiator (14), a magnitude former (16) and a comparator (18), for monitoring this ratio (n/v) to produce an output signal (5) indicative that a change in this ratio is taking place, and an automatic velocity limiting system for the vehicle, particularly one equipped with a diesel engine, the output signal (5) being fed to the velocity limiting system to switch off the velocity limiting mode when no gear is engaged; characterised by a delay component (20) or delaying the automatic switching on again of the velocity limiting system after the output signal disappears.

2. Apparatus according to claim 1, characterised in that the velocity limiting system is adapted to be switched off in the event that the actual engine speed (n) is lower than a speed ($n_{max}$) which corresponds to the maximum permitted velocity ($v_{max}$) with the highest gear engaged.

## Patentansprüche

1. Einrichtung die erkennt, ob ein Getriebegang eingelegt ist, bestehend aus einer Einrichtung (12), die das Verhältnis zwischen Maschinendrehzahl (n) und Fahrzeuggeschwindigkeit (v) bestimmt, einer Einrichtung, die insbesondere einen Differenzierer (14), einen Betragsbildner (16) und einen Komperator (18) umfaßt, zur Ermittlung dieses Verhältnisses (n/v) und zur Erzeugung eines Ausgangssignal (s) das eine Änderung dieses Verhältnisses (n/v) anzeigt und einem System zur Begrenzung der Fahrzeuggeschwindigkeit, insbesondere für Fahrzeuge die mit einer Dieselbrennkraftmaschine ausgestattet sind, dem das Aussgangssignal (s) zugeführt wird, um das System zur Begrenzung der Fahrzeuggeschwindigkeit abzuschalten, wenn kein Gang eingelegt ist, dadurch gekennzeichnet, daß ein Verzögerungselement (20) vorgesehen ist zur Verzögerung der automatischen Wiederinbetriebnahme des Systems zur Begrenzung der Fahrzeuggeschwindigkeit nachdem das Ausgangssignal (s) entfällt.

2. Einrichtung nach Anspruch 1, dadurch gekennzeichnet, daß das System zur Begrenzung der Fahrzeuggeschwindigkeit ausgeschaltet wird, wenn die Drehzahl (n) kleiner ist, als eine Drehzahl ($n_{max}$), die der höchstzulässigen Geschwindigkeit ($v_{max}$) im höchsten Gang entspricht.

## Revendications

1. Appareil pour détecter si une vitesse est engagée dans une boîte de vitesses d'un véhicule à propulsion mécanique, comprenant un dispositif (12) pour calculer le rapport entre la vitesse (n) du moteur et la vitesse (v) du véhicule, un dispositif constitué de préférence par un différentiateur (14), un circuit de gabarit d'amplitude (16) et un comparateur (18) pour surveiller ce rapport (n/v) de manière à produire un signal de sortie (S) indiquant qu'une variation de ce rapport est en train de se produire, et un système de limitation de vitesse automatique du véhicule et en particulier d'un véhicule équipé d'un moteur diesel, le signal de sortie (S) étant appliqué au système de limitation de vitesse pour couper le mode de limitation de vitesse lorsqu'aucune vitesse n'est engagée; appareil caractérisé en ce qu'il comprend un élément de retard (20) destiné à retarder la remise en marche automatique du système de limitation de vitesse après la disparition du signal de sortie.

2. Appareil selon la revendication 1, caractérisé en ce que le système de limitation de vitesse est conçu pour être coupé dans le cas où la vitesse actuelle (n) du moteur est inférieure à une vitesse ($n_{max}$) correspondant à la vitesse maximum permise ($v_{max}$) du véhicule lorsque la vitesse la plus élevée est engagée.